# EUROPEAN PATENT APPLICATION

(11) **EP 4 566 871 A1**
(43) Date of publication of application: **11.06.2025**
(21) Application number: 24194603.7
(22) Date of filing: 14.08.2024
(51) Int. Cl.: B60L 53/62, B60L 58/22, H02J 7/00, B60L 58/18, H01M 10/44, H02J 7/14

(54) **METHOD AND APPARATUS FOR CHARGING AND DISCHARGING BATTERY**

(30) Priority: 08.12.2023 KR 20230178045
(71) Applicant: SAMSUNG SDI CO., LTD., Giheung-gu Yongin-si, Gyeonggi-do 17084 (KR)
(72) Inventor: Hong, Kisung, 17084 Yongin-si, Gyeonggi-do (KR); Hwang, Horyong, 17084 Yongin-si, Gyeonggi-do (KR); Ha, Junhwan, 17084 Yongin-si, Gyeonggi-do (KR)
(74) Representative: Gulde & Partner

(57) **Abstract**

An apparatus for charging and discharging a battery included in a device including a motor includes a first cell discharged during driving of the device to supply power to the motor of the device, a second cell charged with power supplied from the motor by regenerative braking during deceleration of the device, a first switch provided on a charging/discharging path of the first cell, a second switch provided on a charging/discharging path of the second cell, and a processor electrically connected to the first switch and the second switch to control charging/discharging of the first cell and the second cell separately for the first cell and the second cell during charging/discharging of the first cell and the second cell.

## Description

### BACKGROUND

### 1. Field

One or more embodiments relate to a method and apparatus for charging a battery included in a device including a motor.

### 2. Description of the Related Art

Recently, the demand for portable electronic products such as laptops, video cameras, and portable phones have increased rapidly. Also, as the development of energy storage batteries, robots, satellites, etc., is rapidly advancing, research on high-performance secondary batteries that are repeatedly chargeable and dischargeable has been actively pursued.

Such secondary batteries are included in devices equipped with motors (e.g., electric bicycles (e-bikes)) to run the motors of e-bikes, and in order to improve the mileage of e-bikes, methods for increasing the capacities of batteries have been used.

### SUMMARY

One or more embodiments include a method and apparatus for charging a battery included in a device including a motor. However, such a problem is just an example, and the scope of the present disclosure is not limited thereto.

Additional aspects will be set forth in part in the description which follows and, in part, will be apparent from the description, or may be learned by practice of the presented embodiments of the present disclosure.

According to one or more embodiments, an apparatus for charging and discharging a battery included in a device including a motor includes a first cell discharged during driving of the device to supply power to the motor of the device, a second cell charged with power supplied from the motor by regenerative braking during deceleration of the device, a first switch provided on a charging/discharging path of the first cell, a second switch provided on a charging/discharging path of the second cell, and a processor electrically connected to the first switch and the second switch to control charging/discharging of the first cell and the second cell separately for the first cell and the second cell during charging/discharging of the first cell and the second cell.

According to an example, battery charging/discharging rates (C-rates) of the first cell and the second cell may be different from each other.

According to another example, the battery C-rate of the second cell may be greater than the battery C-rate of the first cell.

According to another example, the processor may be further configured to obtain a connection signal of an external charger of the device or a regenerative charging mode signal corresponding to deceleration of the device, measure a charging current on a charging/discharging path connected to the external charger or the motor, determine which charging cell of the first cell and the second cell is to be charged, based on the connection signal of the external charger, the regenerative charging mode signal, and a magnitude of the charging current, and control charging of the charging cell.

According to another example, the processor may be further configured to, if the processor obtains the regenerative charging mode signal, determine the second cell as the charging cell and control charging of the second cell.

According to another example, the processor may be further configured to obtain a driving mode signal corresponding to acceleration of the device, measure a voltage of the first cell and a voltage of the second cell based on the driving mode signal, determine a discharging cell having a greater voltage between the first cell and the second cell, and control discharging of the discharging cell.

According to another example, the processor may be further configured to obtain an idle mode signal corresponding to an idle state of the device, measure a voltage of the first cell and a voltage of the second cell based on the idle mode signal, and, , if the voltage of the second cell is greater than the voltage of the first cell, discharge the second cell to control charging of the first cell.

According to one or more embodiments, a method of charging and discharging a battery included in a device including a motor includes controlling a first switch and a second switch in which the first switch is provided on a charging/discharging path of a first cell discharged during driving of the device to supply power to the motor of the device and the second switch is provided on a charging/discharging path of a second cell charged with power supplied from the motor by regenerative braking during deceleration of the device and controlling charging/discharging of the first cell and the second cell separately for the first cell and the second cell during charging/discharging of the first cell and the second cell.

According to an example, in the controlling of the charging/discharging of the first cell and the second cell, battery charging/discharging rates (C-rates) of the first cell and the second cell may be different from each other

According to another example, in the controlling of the charging/discharging of the first cell and the second cell, the battery C-rate of the second cell may be greater than the battery C-rate of the first cell.

According to another example, the controlling of the charging/discharging of the first cell and the second cell may include obtaining a connection signal of an external charger of the device or a regenerative charging mode signal corresponding to deceleration of the device, measuring a charging current on a charging/discharging path connected to the external charger or the motor, and determining which charging cell of the first cell and the second cell is to be charged based on the connection signal of the external charger, the regenerative charging mode signal, and a magnitude of the charging current, and controlling charging of the charging cell.

According to another example, the controlling of the charging of the charging cell may include determining the second cell as the charging cell and controlling charging of the second cell, if the regenerative charging mode signal is obtained.

According to another example, the controlling of the charging/discharging of the first cell and the second cell may include obtaining a driving mode signal corresponding to acceleration of the device, measuring a voltage of the first cell and a voltage of the second cell based on the driving mode signal, and determining a discharging cell having a greater voltage between the first cell and the second cell and controlling discharging of the discharging cell.

According to another example, the controlling of the charging/discharging of the first cell and the second cell may include obtaining an idle mode signal corresponding to an idle state of the device, measuring a voltage of the first cell and a voltage of the second cell based on the idle mode signal, and, , if the voltage of the second cell is greater than the voltage of the first cell, discharging the second cell to control charging of the first cell.

According to one or more embodiments, a computer program is stored on a recording medium to execute the above-described method on a computing device.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 schematically shows a battery pack according to embodiments of the present disclosure;
FIG. 2 is a flowchart of a method of charging and discharging a battery according to embodiments of the present disclosure;
FIG. 3 is a flowchart of a method of charging and discharging a battery according to other embodiments of the present disclosure; and
FIG. 4 is a flowchart of a method of charging and discharging a battery according to other embodiments of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, various embodiments of the present disclosure will be described in detail with reference to the attached drawings to allow those of ordinary skill in the art to easily carry out the examples of the present disclosure. In the description of the examples disclosed herein, the detailed description of the related known technology will be omitted if it is determined to obscure the subject matter of the present disclosure. Identical or similar components will be given identical reference numerals and will not be repeatedly described.

Throughout the specification, if a component is "connected" to another component, it may include not only a case where they are "directly connected", but also a case where they are "indirectly connected" with another component therebetween. If a component is referred to as "includes" another component, it may mean that the component may further include still another component rather than excluding the still another component unless stated otherwise.

Some examples may be described with functional block configurations and various processing operations. Some or all of the functional blocks may be implemented with various numbers of hardware and/or software configurations. For example, the functional blocks of the present disclosure may be implemented by one or more microprocessors or circuit configurations for certain functions. The functional blocks of the present disclosure may be implemented with various programming or scripting languages. The functional blocks of the present disclosure may be implemented as an algorithm executed on one or more processors. A function performed by a functional block of the present disclosure may be performed by a plurality of functional blocks, or functions performed by a plurality of functional blocks may be performed by one functional block in the present disclosure. Moreover, the present disclosure may employ related art for electronic environment setting, signal processing, and/or data processing, etc.

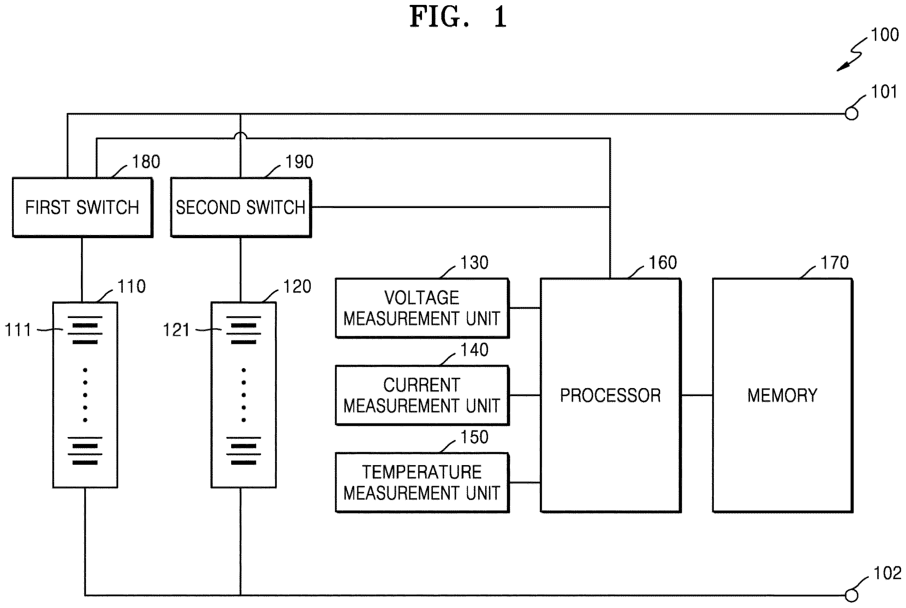

FIG. 1 schematically shows a battery pack according to embodiments of the present disclosure.

Referring to FIG. 1, a battery pack 100 may include a first cell 110, a second cell 120, a processor 160, a memory 170, a voltage measurement unit 130, a current measurement unit 140, and a temperature measurement unit 150. The battery pack 100 may include a first switch 180 and a second switch 190. However, the present disclosure is not limited thereto, the configuration of FIG. 1 may be an example of a battery pack included in a device including a motor, according to the present disclosure. For example, the device including the motor according to the present disclosure may indicate a device including an electronic bicycle (e-bike), etc.

The first cell 110 and the second cell 120 may be chargeable/dischargeable secondary batteries. For example, the first cell 110 and the second cell 120 may include at least one selected from a group including a nickel-cadmium battery, a lead acid battery, a nickel metal hydride battery (NiMH), a lithium ion battery, a lithium polymer battery, etc.

The number of battery cells included in the first cell 110 and the second cell 120 and a connection scheme thereof may be determined based on a power quantity, a voltage, etc., required for the battery pack 100. Although it is shown in FIG. 1 that battery cells 111 and 121 are connected in series for conceptual purposes, the battery cells 111 and 121 may be connected in parallel or in series and in parallel. While it is shown in FIG. 1 that the plurality of battery cells 111 and 121 are included in the first cell 110 and the second cell 120, one battery cell 111 or 121 may be included in the first cell 110 and the second cell 120.

The battery pack 100 may include a pair of pack terminals 101 and 102 to which an electrical load or a charging device may be connected. For example, the motor of the device may be connected to the pack terminals 101 and 102. An external charger of the device may be connected to the pack terminals 101 and 102.

An apparatus for charging and discharging a battery according to embodiments of the present disclosure may include a hybrid cell. The apparatus for charging and discharging a battery according to embodiments of the present disclosure may improve a regenerative charging efficiency by using a hybrid cell and increase a moving distance of the device with an increased capacity. For example, as shown in FIG. 1, the battery pack 100 according to the present disclosure may include a hybrid cell including the first cell 110 and the second cell 120.

The first cell 110 may be a battery that is discharged during driving of the device to supply power to the motor of the device. The second cell 120 may be a battery that is charged with power supplied from the motor due to regenerative braking during deceleration of the device.

The first cell 110) and the second cell 120 according to embodiments of the present disclosure may be batteries having different battery charging/discharging rates (C-rates). The battery C-rate of the second cell 120 may be greater than a battery C-rate of the first cell 110.

For example, the first cell 110 may be a battery used for general driving of the device, and the second cell 120 may be a battery used for regenerative charging of the device. In this case, the second cell 120 may be a high-power cell having a high battery C-rate to improve a charging efficiency by using a regenerative charging current greater than a charging current of the external charger of the device. For example, the second cell 120 may be a battery having a C-rate of 1.33 C. The first cell 110 may be a battery having a C-rate of 0.5 C.

The apparatus for charging and discharging a battery according to embodiments of the present disclosure may charge or discharge the first cell 110 and the second cell 120 separately for the first cell 110 and the second cell 120. For example, the apparatus for charging and discharging a battery according to embodiments of the present disclosure may selectively control the first switch 180 and the second switch 190 to charge or discharge the first cell 110 and the second cell 120. For example, as shown in FIG. 1, the first switch 180 may be provided on a charging/discharging path of the first cell 110. The second switch 190 may be provided on a charging/discharging path of the second cell 120.

The battery pack 100 according to embodiments of the present disclosure may further include a main switch. For example, the main switch may be connected between the first cell 110 and the second cell 120 and one of the pack terminals 101 and 102 (e.g., 101). The main switch may be controlled by the processor 160. Although not shown in FIG. 1, the battery pack 100 may further include a battery protection circuit, a fuse, a current sensor, and so forth.

The apparatus for charging and discharging a battery according to embodiments of the present disclosure may include the processor 160 and the memory 170.

The processor 160 may control an overall operation of the apparatus for charging and discharging the battery. For example, the processor 160 may be implemented in the form selectively including a processor, an application-specific integrated circuit (ASIC), another chipset, a logic circuit, a register, a communication modem, and/or a data processing device, etc., known in art to perform the above-described operation.

The processor 160 may perform basic arithmetic, logic, and input/output operations, and execute a program code stored in the memory 170. The processor 160 may store data in the memory 170 or load data stored in the memory 170.

The memory 170 may include a permanent mass storage device, such as random access memory (RAM), read only memory (ROM), and disk drive, as a recording medium readable by the processor 160. The memory 170 may store an operating system and at least one program or application code. The memory 170 may store data generated by measuring at least one parameter of the first cell 110 and the second cell 120. For example, the data may include a charging/discharging current, a terminal voltage and/or a temperature of the battery.

The voltage measurement unit 130 may be configured to measure voltages of the first cell 110 and the second cell 120. For example, the voltage measurement unit 130 may be electrically connected to opposite ends of the first cell 110 and the second cell 120. The voltage measurement unit 130 may be electrically connected to the processor 160 to exchange electrical signals. The voltage measurement unit 130 may measure a voltage across the opposite ends of the first cell 110 and the second cell 120 at time intervals and output a signal indicating a magnitude of the measured voltage to the processor 160, under control of the processor 160. The processor 160 may determine the voltage of the first cell 110 and the second cell 120 from the signal output from the voltage measurement unit 130. For example, the voltage measurement unit 130 may be implemented using a voltage measurement circuit generally used in the art.

The current measurement unit 140 may be configured to measure charging/discharging current of the first cell 110 and the second cell 120. For example, the voltage measurement unit 140 may be electrically connected to a current sensor provided on the charging/discharging path of the first cell 110 and the second cell 120. The current measurement unit 140 may be electrically connected to the processor 160 to exchange electrical signals. The current measurement unit 140 may repeatedly measure a magnitude of charging current or discharging current of the first cell 110 and the second cell 120 at time intervals and output a signal indicating the measured magnitude of the current to the processor 160, under control of the processor 160. The processor 160 may determine the magnitude of the current from the signal output from the current measurement unit 140. For example, the current sensor may be implemented using a hall sensor or a sense resistor generally used in the art.

The temperature measurement unit 150 may be configured to measure temperatures of the first cell 110 and the second cell 120. For example, the temperature measurement unit 150 may be connected to the first cell 110 and the second cell 120 to measure a temperature of a second battery included in the first cell 110 and the second cell 120. The temperature measurement unit 150 may be electrically connected to the processor 160 to exchange electrical signals. The temperature measurement unit 150 may repeatedly measure the temperature of the secondary battery at time intervals and output a signal indicating a magnitude of the measured temperature to the processor 160. The processor 160 may determine the temperature of the secondary battery from the signal output from the temperature measurement unit 150. For example, the temperature measurement unit 150 may be implemented using a thermocouple generally used in the art.

The processor 160 may be electrically connected to the first switch 180 and the second switch 190 to exchange signals. The processor 160 may control charging/discharging of the first cell 110 and the second cell 120 separately for the first cell 110 and the second cell 120 during charging/discharging of the first cell 110 and the second cell 120. For example, the processor 160 may selectively control the first switch 180 and the second switch 190 to control charging/discharging of the first cell 110 and the second cell 120.

For example, the processor 160 may close (ON) the first switch 180 and open (OFF) the second switch 190 to discharge the first cell 110 without discharging the second cell 120. The processor 160 may close (ON) the second switch 190 and open (OFF) the first switch 180 to discharge the second cell 120 without discharging the first cell 110.

For example, the processor 160 may close (ON) the first switch 180 and open (OFF) the second switch 190 to charge the first cell 110 without charging the second cell 120. The processor 160 may close (ON) the second switch 190 and open (OFF) the first switch 180 to charge the second cell 120 without charging the first cell 110.

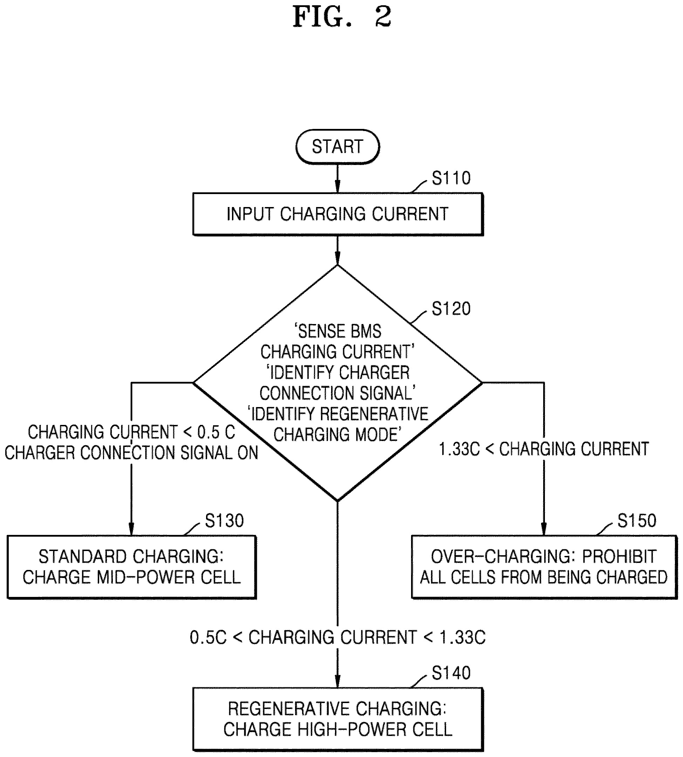

FIG. 2 is a flowchart of a method of charging and discharging a battery according to embodiments of the present disclosure.

Referring to FIG. 2, a flowchart is shown for describing a method of charging a battery according to embodiments of the present disclosure.

The method of charging a battery according to embodiments of the present disclosure may include a charging method using the external charger of the device and a regenerative charging method using regenerative braking of the device. For example, the processor 160 may distribute charging by recognizing a preset charger connection signal input from the outside of the device or a regenerative charging mode during driving of the device. For example, in the regenerative charging mode, a charging current of a higher rate may be input to a standard charging current within a short period of time. In this case, a high-rate charging current may be applied to charging of a high-power cell capable of high-rate charging.

In operations S110 and S120, the apparatus according to the present disclosure may receive a charging current from the external charger or due to regenerative braking. The processor 160 may obtain a connection signal of the external charger of the device or a regenerative charging mode signal corresponding to deceleration of the device. For example, the processor 160 may determine the charging mode as a standard charging mode if obtaining the connection signal of the external charger of the device. For example, the processor 160 may determine the charging mode as a regenerative charging mode if obtaining the regenerative charging mode signal corresponding to deceleration of the device. The processor 160 may measure a charging current on the charging/discharging path connected to the external charger or the motor. For example, the processor 160 may measure the charging current input onto the charging/discharging path from the external charger. For example, the processor 160 may measure the charging current input onto the charging/discharging path from the motor due to regenerative braking.

The processor 160 may determine a charging cell to be charged between the first cell 110 and the second cell 120 based on the connection signal of the external charger, the regenerative charging mode signal, and the magnitude of the charging current, and control charging of the charging cell.

In operation S130, the processor 160 may determine the charging mode as a standard charging mode if obtaining the connection signal of the external charger of the device. If the magnitude of the charging current is less than 0.5 C, the processor 160 may determine the standard charging mode as the charging mode. In this case, in the standard charging mode, the processor 160 may determine the first cell 110, which is a mid-power cell, as the charging cell to be charged and control the first switch 180 and the second switch 190 to charge the first cell 110.

In operation S140, the processor 160 may determine the charging mode as a regenerative charging mode if obtaining the regenerative charging mode signal corresponding to deceleration of the device. If the magnitude of the charging current is greater than 0.5 C and is less than 1.33 C, the processor 160 may determine the regenerative charging mode as the charging mode. In this case, in the regenerative charging mode, the processor 160 may determine the second cell 120, which is a high-power cell, as the charging cell to be charged and control the first switch 180 and the second switch 190 to charge the second cell 120.

In operation S150, the processor 160 may determine an over-charging mode as the charging mode if the magnitude of the charging current is greater than 1.33 C. In this case, the processor 160 may control the first switch 180 and the second switch 190 to prohibit both the first cell 110 and the second cell 120 from being charged.

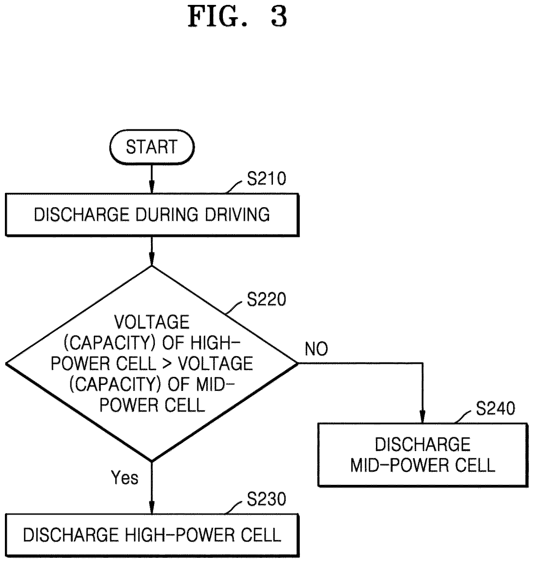

FIG. 3 is a flowchart of a method of charging and discharging a battery according to other embodiments of the present disclosure.

Referring to FIG. 3, a flowchart is shown for describing a method of discharging a battery according to embodiments of the present disclosure.

In a method of discharging a battery according to embodiments of the present disclosure, during driving of a device, the remaining charging capacity states of a high-power cell and a mid-power cell may be measured and then discharging of the high-power cell may be performed first if a voltage of the high-power cell is greater than a voltage of the mid-power cell. According to the present disclosure, by equalizing the voltages of the high-power cell and the mid-power cell in a state where the voltages are increased by regenerative charging due to regenerative braking, a parallel system may be effectively used and an efficiency thereof may be maximized.

In operation S210, the processor 160 may obtain a driving mode signal corresponding to acceleration of the device. The processor 160 may measure the voltages of the first cell 110 and the second cell 120 based on the driving mode signal.

In operation S220, the processor 160 may determine a discharging cell having a greater voltage between the first cell 110 and the second cell 120 and control discharging of the discharging cell. For example, in operation S230, if the voltage of the second cell 120 that is a high-power cell is greater than that of the first cell 110 that is a mid-power cell, the processor 160 may determine the second cell 120 as the discharging cell and control the first switch 180 and the second switch 190 to discharge the second cell 120. In operation S240, if the voltage of the second cell 120 that is a high-power cell is not greater than that of the first cell 110 that is a mid-power cell, the processor 160 may determine the first cell 110 as the discharging cell and control the first switch 180 and the second switch 190 to discharge the first cell 110.

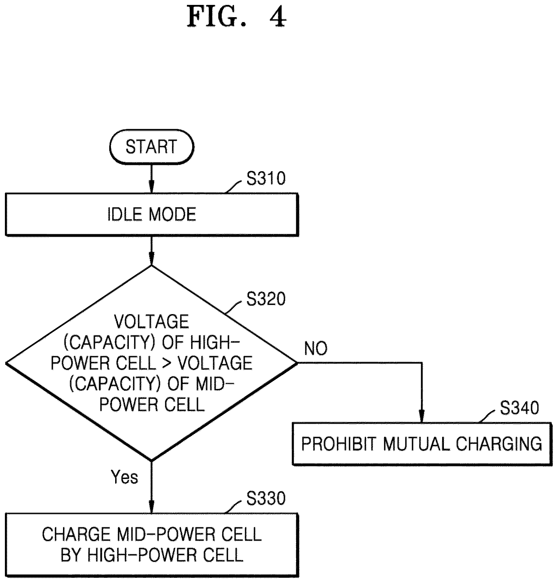

FIG. 4 is a flowchart of a method of charging and discharging a battery according to other embodiments of the present disclosure.

Referring to FIG. 4, a flowchart is shown for describing a method of charging and discharging a battery in an idle state of a device, according to embodiments of the present disclosure. For example, a state where the device is not driven may be referred to as the idle state.

In operation S310, the processor 160 may obtain an idle mode signal corresponding to the idle state of the device.

In operation S320, the processor 160 may measure the voltages of the first cell 110 and the second cell 120 based on the idle mode signal. In operation S330, the processor 160 may discharge the second cell 120 to control charging of the first cell 110, if the voltage of the second cell 120 is greater than that of the first cell 110. For example, referring to FIGS. 1 and 4 together, if the voltage of the second cell 120 that is a high-power cell is greater than the voltage of the first cell 110 that is a mid-power cell, the processor 160 may close (ON) both the first switch 180 and the second switch 190 to charge the first cell 110 by discharging the second cell 120. In operation S340, if the voltage of the second cell 120 is not greater than the voltage of the first cell 110, the processor 160 may open (OFF) both the first switch 180 and the second switch 190 to prohibit mutual charging between the first cell 110 and the second cell 120.

The various embodiments described above are illustrative and are not to be independently implemented separately from each other. Embodiments described herein may be implemented in combination with each other.

Various embodiments of the present disclosure may be implemented in the form of a computer program executable on a computer through various components, and the computer program may be recorded on a computer-readable medium. The medium may continuously store an executable program or temporarily store the same for execution or downloading. The medium may include various recording means or storage means in a form of single hardware or a combination of several hardware, and may be distributed over a network without being limited to a medium directly connected to a certain computer system. Examples of the medium may include a magnetic medium such as a hard disk, a floppy disk, and a magnetic tape, an optical recording medium such as a CD-ROM and a DVD, a magneto-optical medium such as a floptical disk, ROM, RAM, flash memory, etc., to store a program instruction. Other examples of the medium may include a recording medium or a storage medium managed by an app store that distributes applications, a site that supplies or distributes various software, a server, etc.

In the specification, the term "unit", "module", etc., may be a hardware component like a processor or a circuit, and/or a software component executed by a hardware component like a processor. For example, "unit", "module", etc., may be implemented by components such as software components, object-oriented software components, class components, and task components, processes, functions, properties, procedures, subroutines, segments of program code, drivers, firmware, microcode, circuits, data, a database, data structures, tables, arrays, and variables.

Those of ordinary skill in the art to which the present disclosure pertains will appreciate that the present disclosure may be implemented in different detailed ways without departing from the essential characteristics of the present disclosure. Accordingly, the aforementioned embodiments should be construed as being only illustrative, but should not be constructed as being restrictive from all aspects. For example, each element described as a single type may be implemented in a distributed manner, and likewise, elements described as being distributed may be implemented as a coupled type.

The scope of the present disclosure is defined by the following claims rather than the detailed description, and the meanings and scope of the claims and all changes or modified forms derived from their equivalents should be construed as falling within the scope of the present disclosure.

According to the present disclosure, a method and apparatus for effectively charging and discharging a battery included in a device including a motor may be provided. According to the present disclosure, a driving distance of the device may be improved, safety of the battery included in the device may be secured, and a lifetime of the battery may be lengthened. However, the scope of the present disclosure is not limited by these effects.

It should be understood that embodiments described herein should be considered in a descriptive sense only and not for purposes of limitation. Descriptions of features or aspects within each embodiment should typically be considered as available for other similar featuresor aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. An apparatus for charging and discharging a battery included in a device comprising a motor, the apparatus comprising:
a first cell (110) configured to be discharged during driving of the device to supply power to the motor of the device;
a second cell (120) configured to be charged with power supplied from the motor by regenerative braking during deceleration of the device;
a first switch (180) provided on a charging/discharging path of the first cell (110);
a second switch (190) provided on a charging/discharging path of the second cell (120); and
a processor (160) electrically connected to the first switch (180) and the second switch (190) to control charging/discharging of the first cell (110) and the second cell (120) separately for the first cell (110) and the second cell (120) during charging/discharging of the first cell (110) and the second cell (120).

2. The apparatus as claimed in claim 1, wherein battery charging/discharging rates, C-rates, of the first cell (110) and the second cell (120) are different from each other.

3. The apparatus as claimed in claim 1 or 2, wherein the battery C-rate of the second cell (120) is greater than the battery C-rate of the first cell (110).

4. The apparatus as claimed in any of the preceding claims, wherein the processor (160) is further configured to
obtain a connection signal of an external charger of the device or a regenerative charging mode signal corresponding to deceleration of the device,
measure a charging current on a charging/discharging path connected to the external charger or the motor,
determine which charging cell of the first cell (110) and the second cell (120) is to be charged, based on the connection signal of the external charger, the regenerative charging mode signal, and a magnitude of the charging current, and
control charging of the charging cell.

5. The apparatus as claimed in claim 4, wherein the processor (160) is further configured to, if the processor (160) obtains the regenerative charging mode signal, determine the second cell (120) as the charging cell and control charging of the second cell (120).

6. The apparatus as claimed in any of the preceding claims, wherein the processor (160) is further configured to:
obtain a driving mode signal corresponding to acceleration of the device;
measure a voltage of the first cell (110) and a voltage of the second cell (120) based on the driving mode signal;
determine a discharging cell having a greater voltage between the first cell (110) and the second cell (120); and
control discharging of the discharging cell.

7. The apparatus as claimed in any of the preceding claims, wherein the processor (160) is further configured to:
obtain an idle mode signal corresponding to an idle state of the device;
measure a voltage of the first cell (110) and a voltage of the second cell (120) based on the idle mode signal; and
discharge the second cell (120) to charge the first cell (110) if the voltage of the second cell (120) is greater than the voltage of the first cell (110).

8. A method of charging and discharging a battery included in a device comprising a motor, the method comprising:
controlling a first switch (180) and a second switch (190), wherein the first switch (180) is provided on a charging/discharging path of a first cell (110) discharged during driving of the device to supply power to the motor of the device, and the second switch (190) is provided on a charging/discharging path of a second cell (120) charged with power supplied from the motor by regenerative braking during deceleration of the device; and
controlling charging/discharging of the first cell (110) and the second cell (120) separately for the first cell (110) and the second cell (120) during charging/discharging of the first cell (110) and the second cell (120).

9. The method as claimed in claim 8, wherein in the controlling of the charging/discharging of the first cell (110) and the second cell (120), battery charging/discharging rates, C-rates, of the first cell (110) and the second cell (120) are different from each other.

10. The method as claimed in claim 8 or 9, wherein in the controlling of the charging/discharging of the first cell (110) and the second cell (120), the battery C-rate of the second cell (120) is greater than the battery C-rate of the first cell (110).

11. The method as claimed in any of claims 8 to 10, wherein the controlling of the charging/discharging of the first cell (110) and the second cell (120) comprises:
obtaining a connection signal of an external charger of the device or a regenerative charging mode signal corresponding to deceleration of the device;
measuring a charging current on a charging/discharging path connected to the external charger or the motor; and
determining which of the first cell (110) and the second cell (120) is a charging cell to be charged, based on the connection signal of the external charger, the regenerative charging mode signal, and a magnitude of the charging current, and controlling charging of the charging cell.

12. The method as claimed in claim 11, wherein the controlling of the charging of the charging cell comprises determining the second cell (120) as the charging cell and controlling charging of the second cell (120), if the regenerative charging mode signal is obtained.

13. The method as claimed in any of the preceding claims, wherein the controlling of the charging/discharging of the first cell (110) and the second cell (120) comprises:
obtaining a driving mode signal corresponding to acceleration of the device;
measuring a voltage of the first cell (110) and a voltage of the second cell (120), based on the driving mode signal; and
determining a discharging cell having a greater voltage between the first cell (110) and the second cell (120) and controlling discharging of the discharging cell.

14. The method as claimed in any of the preceding claims, wherein the controlling of the charging/discharging of the first cell (110) and the second cell (120) comprises:
obtaining an idle mode signal corresponding to an idle state of the device;
measuring a voltage of the first cell (110) and a voltage of the second cell (120), based on the idle mode signal; and
discharging the second cell (120) to charge the first cell (110), if the voltage of the second cell (120) is greater than the voltage of the first cell (110).

15. A computer program stored on a recording medium to execute the method according to any one of claims 8 to 14 by using a computing device.
